# EUROPÄISCHE PATENTANMELDUNG

(11) **EP 3 454 263 A1**
(43) Veröffentlichungstag der Anmeldung: **13.03.2019**
(21) Anmeldenummer: 17190175.4
(22) Anmeldetag: 08.09.2017
(51) Int. Cl.: G06Q 10/02, G06Q 10/04, B60P 3/00

(54) **VORRICHTUNG, COMPUTERPROGRAMMPRODUKT, SIGNALFOLGE UND VERFAHREN ZUR UNTERSTÜTZUNG EINER ERBRINGUNG EINER DIENSTLEISTUNG WÄHREND EINER FAHRT**

(71) Anmelder: VOLKSWAGEN AKTIENGESELLSCHAFT, 38440 Wolfsburg (DE)
(72) Erfinder: HÖFLICH, Sebastian, 23570 Lübeck (DE); RÖMMELER, Volker, 38154 Lauingen am Elm (DE); WEHINGER, Jan, 38114 Braunschweig (DE)

(57) **Zusammenfassung**

Es werden eine Vorrichtung, ein Computerprogrammprodukt, eine Signalfolge sowie ein Verfahren zur Unterstützung einer Erbringung einer Dienstleistung während einer Fahrt mit einem Fortbewegungsmittel (15) vorgeschlagen. Das Verfahren umfasst die Schritte:
- Ermitteln eines Fahrtprofils einer bevorstehenden Fahrt mit dem Fortbewegungsmittel (15) und in Abhängigkeit des Fahrtprofils
- automatisches Zuordnen einer während der Fahrt zu erbringenden Dienstleistung.

## Beschreibung

### Stand der Technik

Die vorliegende Erfindung betrifft eine Vorrichtung, ein Computerprogrammprodukt, eine Signalfolge sowie ein Verfahren zur Unterstützung einer Erbringung einer Dienstleistung während einer Fahrt mit einem Fortbewegungsmittel. Insbesondere betrifft die vorliegende Erfindung eine bestmögliche Anwenderunterstützung bei der Abarbeitung anstehender Aufgaben u.a. durch die Verwendung mobiler Dienstleistungen.

Die Fortentwicklung des Individualverkehrs schreitet derzeit rasch voran. Einerseits werden gemeinsam verwendete Fortbewegungsmittel (Car-Sharing, Pool-Fahrzeuge, etc.) immer stärker nachgefragt und professioneller angeboten. Andererseits schreitet auch die Automatisierung des Personenindividualverkehrs immer rascher voran, so dass die Insassen entsprechender Fahrzeuge die Reisezeit anderweitig nutzen können.

Dienstleistungen hingegen werden bis heute üblicherweise in stationären Einrichtungen (z.B. "Ladengeschäften") angeboten. Anbieter stationärer Dienstleistungen stehen bislang vor den Problemen, dass sie ausschließlich hohe Umsätze in teuren Toplagen erzielen können, die Skalierung schwierig ist, Mietverträge eine langfristige Ortsbindung bewirken und die Investitionskosten und das unternehmerische Risiko hoch sind.

Endkunden, welche die Dienstleistung gern erleben wollen, haben mitunter lange Fahrwege und hohe Kosten für die stationären Dienstleistungen auf sich zu nehmen. Folglich verbringt der Endkunde nicht nur die Fahrzeit zum Arbeitsplatz, sondern zusätzlich die Zeit zum jeweiligen Dienstleister (z.B. Restaurant, Anwalt, Behörde) im Fahrzeug. Aktuell verbringt ein Deutscher ca. 60 Min. pro Tag im Auto. Zudem können viele ältere Menschen nicht mehr fahren. Mit dem autonomen Fahren ist das wieder möglich.

Spartenspezifisch sind auch Ansätze bekannt, bei welchen die Dienstleistung zum Kunden kommt. Beispielsweise werden Frisierdienstleistungen zu Hause angeboten oder fahrende Einzelhändler (der "Eiermann") machen Station in Wohngegenden, um dort Waren abzusetzen.

Vereinzelt ist bereits die Erbringung von Dienstleistung für Fahrgäste bekannt. Beispielsweise können gastronomische Dienstleistungen in Zügen des Fernverkehrs in Anspruch genommen oder audiovisuelle Inhalte ("Bord-Kino") konsumiert werden.

DE 20 2015 106 556 U1 offenbart eine fahrbare Vorrichtung zur mobilen Bereitstellung unterschiedlicher Serviceleistungen in modularer Bauweise, umfassend eine Antriebseinheit, Energiespeichereinheit und/oder dazugehörige Elektronik. Ein austauschbares Servicemodul, welches beispielsweise ein Zapfhahnmodul, ein Kühlmodul, ein Eismodul oder eine Nassstrecke umfassen kann, ist reversibel über korrespondierende Arretierungspunkte mit einem Fahrgestell verbunden.

UBER nutzt mittlerweile Fahrradkuriere, um Essen direkt ins Fahrzeug zu liefern. So können zumindest die Ergebnisse gastronomischer Dienstleitungen bei minimalen Mehrkosten in herkömmlichen Fahrzeugen genossen werden. Die Fahrzeuge selbst hingegen sind nicht service-spezifisch ausgestaltet. Zudem wird die Dienstleistung nicht im Fahrzeug erbracht, sondern endet an der Fahrzeugtür mit der Übergabe des Essens.

www.luxurymobilebarbershop.com bietet einen mobilen Frisiersalon, bei welchem der Kunde den Ort der Dienstleistung (Bsp. Flughafenparkplatz) definiert und der Fahrer den mobilen Friseursalon zu dem definierten Ziel fährt, um dort die Dienstleistung zu erbringen.

In Fortbewegungsmitteln angebotene Dienstleistungen bieten bereits heute On-Demand Services besonders im Luxus-Segment an. Diese bieten ihren Endkunden Ortsunabhängigkeit, Zeitersparnis und Exklusivität, meist jedoch zu einem Preis, welcher für eine vielköpfige Kundschaft zu hoch ist. In Fortbewegungsmitteln angebotene Dienstleistungen sind heute wegen hoher Investitionskosten und mangelnder Auslastung meist im Luxus-Segment zu finden. Gründe hierfür sind, dass das Fahrzeug zum Umbau gekauft werden muss, viel Handarbeit für den Umbau notwendig ist, wenige Standard-Bauteile zur Verfügung stehen, der Service-Anbieter lange Wege zwischen den Kunden zu fahren hat und schließlich das operative Management (Bezahlung, Buchung, Steuern) selbstständig zu übernehmen hat. Zudem sind umfangreiche Modifikationen von Fortbewegungsmitteln stets mit kostspieligen Einzelabnahmen der zuständigen Stellen verbunden.

Ausgehend vom vorgenannten Stand der Technik ist es eine Aufgabe der vorliegenden Erfindung, die Nutzung mobiler Dienstleistungen für den Anwender effizienter und befriedigender zu gestalten. Weiterhin ist es eine Aufgabe der vorliegenden Erfindung, eine Erledigung für den Anwender anstehender Aufgaben bestmöglich mit dem Bezug während einer Fahrt mit einem Fortbewegungsmittel zu erbringender Dienstleistungen zu kombinieren.

### Offenbarung der Erfindung

Die vorgenannte Aufgabe wird erfindungsgemäß durch die Gegenstände der unabhängigen Ansprüche gelöst. Die Unteransprüche zeigen bevorzugte Weiterbildungen der Erfindung.

Die Erfindung basiert auf dem Grundgedanken, dass die Konsumbereitschaft von Fahrgästen grundsätzlich höher ist, als wenn dieselbe Person frei verfügbare Zeit für den Konsum einer Dienstleistung aufwenden muss.

Um den Konsum von Dienstleistungen während der Fortbewegung besser auf die Anforderungen des Service-Erbringers und des Kunden anzupassen, fußt die vorliegende Erfindung beispielsweise auf dem Konzept, Fahrzeugplattformen mit allen für ein autonomes Fahren notwendigen technischen Einheiten, wie Fahrwerk, Antriebseinheit usw. bereitzustellen, welche bedarfsweise mit auf eine Dienstleistungserbringung während der Fahrt zugeschnittenen Fahrgastzellen verbindbar sind. Die Fahrgastzellen werden im Rahmen der vorliegenden Offenbarung als "CABs" bezeichnet. "CAB" steht für "Kabine" oder "Cabin".

Anders ausgedrückt ist eine CAB ein für einen spezifischen Service oder eine Servicegruppe angepasster Fahrzeugaufbau, der alle Schnittstellen bereithält, um die zur Dienstleistungserbringung erforderliche Einrichtung zu beherbergen und zu betreiben.

Die CAB kann daher als mechanische Einheit verstanden werden, welche als solche über vordefinierte Schnittstellen mit der Fahrzeugplattform/der Fahrlafette verbunden werden kann. Die Schnittstellen sorgen für eine mechanisch reversible, jedoch zuverlässige Verbindung zwischen der CAB und der Fahrlafette. Weitere Schnittstellen können zur Energieübertragung, insbesondere elektrischer Energie, zwischen der CAB und der Fahrlafette eingerichtet sein. Auch diese Schnittstellen sind reversibel ausgestaltet. Insbesondere können weitere Betriebsmittel (Flüssigkeiten), mechanische Energieübertragungsmittel, z.B. Wellen, Zahnräder, o.ä. für eine mechanische Energieübertragung von der Fahrlafette an die CAB, sowie Funkverbindungen und/oder eine datentechnische Verknüpfung zwischen der einzelnen CAB und der Fahrlafette sowie ihren Bausteinen vorgesehen sein. Für alle informationstechnischen Verknüpfungen der Fahrlafette mit der CAB bieten sich als Schnittstellen beispielsweise elektrische und/oder optische Leitungen, insbesondere Bussysteme, an.

Um eine kostengünstige, rasche und wenig fehleranfällige Konfiguration einer aus Fahrlafette und CAB bestehenden mobilen Einheit (auch "Servicemobil") zu ermöglichen, kann vorgesehen sein, dass sämtliche Schnittstellen zwischen der CAB und der Fahrlafette in im Wesentlichen identischer Richtung zueinander korrespondierend angeordnet sind. Mit anderen Worten kann eine CAB in einer ersten Richtung mechanisch mit der Fahrlafette in Eingriff gebracht werden, wobei beispielsweise Schienen für eine formschlüssige Verbindung zwischen CAB und Fahrlafette sorgen. Dieselbe Richtung kann für die energetische Verbindung zwischen der Fahrlafette und der CAB vorgesehen sein. Insbesondere kann sichergestellt werden, dass eine korrekte mechanische Verbindung zwischen der Fahrlafette und der CAB automatisch zu einer korrekten energetischen Verbindung der Fahrlafette mit der CAB führt. Entsprechendes kann für die Schnittstellen zur Betriebsmittelübertragung gelten. Sofern auch Daten zwischen der CAB und der Fahrlafette (z.B. bidirektional) auszutauschen sind, können beispielsweise leitungsvermittelnde Schnittstellen entsprechend angeordnet sein und bei der Verbindung zwischen der Fahrlafette und der CAB automatisch geschlossen werden. Dies schließt eine drahtlose Übertragung von Daten zwischen Fahrlafette und CAB jedoch nicht aus, wozu ebenfalls Schnittstellen vorgesehen sein können. Zumindest können mehrere Schnittstellen, insbesondere wesensgleiche standardisierte Schnittstellen, räumlich zusammengefasst sein und reversibel, jedoch gegen ein unerwünschtes Lösen gesichert, an korrespondierenden Positionen an der Fahrlafette/der CAB angeordnet sein.

Durch die oben genannte Standardisierung können für die Erbringung von Dienstleistungen während der Fahrt erforderliche Randbedingungen geschaffen werden, welche eine erhebliche Kostenreduzierung und einen bislang unerreichten Individualisierungsgrad von Fahrzeugen ermöglichen. Während die CABs den Dienstleistern vordefinierte Rahmen bieten, um ihre Dienstleistung sicher und anwendertauglich anzubieten, sorgt die Fahrlafette für effiziente, komfortable, rasche und zeitsparende Fortbewegung, insbesondere im Falle automatisch fahrfähiger Fahrlafetten. Hierdurch wird älteren oder fahruntüchtigen Personen sowie Kindern während der Reise eine individuelle Dienstleistung geboten.

Das oben genannte Konzept aus Fahrlafette und CAB ermöglicht die Erbringung von individualisierten Dienstleistungen unterwegs, wobei das beschriebene Konzept die physische Plattform darstellt, welche in Verbindung mit einer digitalen Vermittlungsplattform (Server) potentiellen Kunden zugänglich gemacht wird. Die hier offenbarte Technologie beschreibt das Zusammenspiel der einzelnen Komponenten und Akteure in dem Plattform-Ökosystem. Es ermöglicht die freie Zeit, die durch das autonome Fahren bzw. Taxifahrten entsteht, optimal zu nutzen und zu monetarisieren.

In dem Plattform-Ökosystem werden Probleme verschiedener Akteure gelöst. Dabei ist zwischen Endkunden (nutzen Services während der Fahrt), Service-Anbietern (bieten Services während der Fahrt an wie z.B. Anwälte) und Microservice-Providern (stellen Bausteine zur Ausstattung der Fahrzeuge bereit) zu unterscheiden. Die Bausteine müssen nicht physisch sein bzw. die gegenständliche Inneneinrichtung der CAB betreffen, sondern könnten auch Software-Bausteine sein, z.B. eine Darstellung eines Restaurant-Menüs auf einem Display.

Die Vermittlung aus Fahrlafette und CAB bestehender Servicemobile kann beispielsweise über einen Server in Verbindung mit vom Kunden/Dienstleistungsanbieter verwendeten (mobilen) Drahtloskommunikationsendgeräten ("Anwenderendgerät") vorgenommen werden. Eine Applikation stellt hierbei die Schnittstelle zum Endkunden dar. Der Endkunde bucht über die Applikation die mobilen On-Demand-Services. Dazu definiert der Endnutzer Startpunkt, Ziel, Startzeit und Art der während der Fahrt zu erbringenden Dienstleistung. Endkunden können weitere Aufgaben über die Applikation erledigen wie z.B. Anfragen senden, Suchergebnisse sichten, Servicemobile/Dienstleistungen buchen, Bewertungen abgeben sowie die gebuchten bzw. bezogenen Dienstleistungen bezahlen.

Der Serviceanbieter kann ein eigenes Profil digital bereithalten, mittels dessen sich der Endnutzer über die angebotenen Services, Kundenmeinungen etc. informieren kann. Entscheidet sich der Endnutzer für den Bezug eines Services, wird seine Anfrage auf dem Anwenderendgerät des mobilen Serviceanbieters oder in dessen Fahrzeug angezeigt. Der Serviceanbieter kann die Anfrage akzeptieren, wodurch der kombinierte Beförderungs-/Dienstleistungsvertrag zustande kommt.

Im Rahmen der vorliegenden Offenbarung erbringbare Dienstleistungen lassen sich beispielsweise in die folgenden Ausprägungen/Kategorien gliedern:
- Die Dienstleistung kann von einem Menschen oder unbemannt erbracht werden (z.B. Friseur gegenüber Multimedia-Darbietung)
- individualisierte CAB oder Massenware (z.B. generisches Restaurant gegenüber systemgastronomischer Ausgestaltung)

Zusammengefasst umfasst die der vorliegenden Technologie zugrundeliegende Fahrzeugarchitektur zumindest zwei gegenständliche Komponenten: Die zur Fortbewegung erforderliche Komponente wird als "Fahrlafette" bezeichnet, in welcher sich die Technik zum autonomen Fahren befinden kann. Zudem wird der Fahrzeugaufbau (CAB) verwendet, der alle Schnittstellen bereithält, um die zur Dienstleistungserbringung erforderliche, spezifische Einrichtung zu beherbergen und zu betreiben. Die aus den vorgenannten Komponenten bestehenden Fahrzeuge/Fortbewegungsmittel werden auch als "Servicemobil" bezeichnet. Sie könnten auch als "physische Apps auf Rädern" bezeichnet werden, da sie hinsichtlich ihres Funktionsumfangs so vielfältig sind, wie durch Applikationen individualisierte Smartphone-Plattformen.

Unter Berücksichtigung der vorstehend offenbarten Technologie stellt die vorliegende Erfindung ein Verfahren zur Unterstützung einer Erbringung einer Dienstleistung während einer Fahrt mit einem Fortbewegungsmittel bereit. Die Unterstützung wird hierbei einerseits dem Anwender, andererseits dem Dienstleistungserbringer zuteil. Das Fortbewegungsmittel kann ein Straßenfahrzeug sein. Insbesondere kann ein PKW, Transporter, LKW, o.ä., ausgestaltet sein, die Dienstleistung während der Fahrt zumindest anteilig zu erbringen. Das Fortbewegungsmittel kann hierzu entsprechend den obigen Ausführungen eigens zur Erbringung der Dienstleistung oder Dienstleistungsfamilie eingerichtet sein. In einem ersten Schritt wird ein Fahrtprofil einer bevorstehenden Fahrt mit dem Fortbewegungsmittel ermittelt. Mit anderen Worten wird ermittelt, dass der Anwender eine Fahrt bestimmter bzw. vorbestimmter Eigenschaften zu absolvieren hat. Die Ermittlung kann automatisch erfolgen. Dies schließt nicht aus, dass eine Vielzahl anstehender Fahrten mit entsprechenden Fahrtprofilen ermittelt wird. In Abhängigkeit des Fahrtprofils wird anschließend automatisch zumindest eine während zumindest einer Fahrt zu erbringende Dienstleistung automatisch zugeordnet. Mit anderen Worten wird eine Dienstleistung ausgewählt, welche bezüglich des Fahrtprofils eine Eignung zur Erbringung während der bevorstehenden Fahrt aufweist. Beispielsweise kann das Fahrtprofil durch eine Mindestdauer, eine Mindestentfernung, eine Streckenbeschaffenheit, eine während der Fahrt vorhandene (Daten-) Infrastruktur o.ä. zur Erbringung der Dienstleistung gekennzeichnet sein. Das automatische Zuordnen der während der Fahrt zu erbringenden Dienstleistung schließt nicht aus, dass ein und dieselbe Dienstleistung unterschiedlichen Fahrten oder unterschiedliche Dienstleistungen ein und derselben Fahrt oder unterschiedliche Dienstleistungen unterschiedlichen Fahrten zugeordnet werden. Beim Zuordnen kann ein ermitteltes Rating (eine Bewertung) einer Dienstleistung berücksichtigt werden. Ebenso kann der Anwender/Dienstleistungskonsument erfahrungsbasiert vordefiniert haben, ob die Dienstleistung bevorzugt erneut oder nicht mehr von demselben Dienstleistungsanbieter bezogen werden soll. Zusammengefasst wird eine geeignete Konstellation zwischen einer Dienstleistung und einer bevorstehenden Fahrt ermittelt, sobald das Fahrtprofil der bevorstehenden Fahrt feststeht. Auf diese Weise können bevorstehende Fahrten bestmöglich für den Konsum von Dienstleistungen verwendet werden. Eine Auswahl einer Dienstleistung durch den Anwender kann erübrigt oder zumindest unterstützt werden.

Die Unteransprüche zeigen bevorzugte Weiterbildungen der Erfindung.

Beispielsweise kann eine Aufgabenliste eines Anwenders ausgelesen werden, um die bevorstehende Fahrt zu ermitteln. Die Aufgabenliste kann beispielsweise digital in einem Anwenderendgerät, in einer Cloud oder in anderer Form bereitgestellt vorliegen. Dies schließt nicht aus, dass die Aufgabenliste auch eine Vorauswahl für die während der Fahrt zu erbringenden Dienstleistungen unterstützen kann. Die Aufgabenliste kann beispielsweise die folgenden Informationen bezüglich eines jeweiligen Eintrages umfassen:
- ein ausgewählter Dienst/Dienstleister
- eine bevorzugte Tageszeit/Uhrzeit zur Absolvierung der Aufgabe/ des Eintrages
- ein bevorzugter Kontext (z.B. Wetter, Jahreszeit, Begleitung, vorherige bzw. nachfolgende Termine/Tätigkeiten, zuvor zu erledigende Aufgaben/wahrzunehmende Termine usw.)
- Dringlichkeit (z.B. unverzüglich, zeitnah, sobald möglich, eines Tages)

Beispielsweise kann ein Eintrag der Aufgabenliste durch Bezug einer Dienstleistung während der Fahrt erledigt werden. In entsprechender Weise kann die Aufgabenliste ein bevorstehendes Fahrtziel und somit das Fahrtprofil der bevorstehenden Fahrt kennzeichnen/definieren. In Abhängigkeit eines Eintrags der Aufgabenliste wird also automatisch die während der Fahrt zu erbringende Dienstleistung zugeordnet oder vorausgewählt. Durch die Vorauswahl bzw. Zuordnung wird die Erfüllung der Aufgabe erleichtert oder zumindest vorbereitet.

Das Zuordnen der zu erbringenden Dienstleistung zu der Fahrt kann beispielsweise in Abhängigkeit einer vordefinierten Dringlichkeit erfolgen, welche sich beispielsweise aus einer Priorität und/oder eines vordefinierten Erledigungsdatums innerhalb der vorgenannten Aufgabenliste ergeben kann. Die Dringlichkeit kann sich beispielsweise aus einer zeitlichen Nähe einer Deadline zur Erledigung der Aufgabe ergeben. Die Deadline kann vom Anwender definiert worden sein oder sich aus einem via das Internet verfügbaren Datensatz ergeben (z.B. die Frist zur Abgabe einer Steuererklärung). Alternativ oder zusätzlich kann die Dringlichkeit in Abhängigkeit einer vordefinierten Konsequenz eines Überschreitens der Deadline ergeben (z.B. verlängerbare Fristen, Fristen, deren Überschreitung einen Rechtsverlust zur Folge hat). Die Dringlichkeit kann auch automatisch ermittelt werden oder sich aus dem Inhalt der jeweiligen Dienstleistung ergeben. Beispielsweise kann für zwei aufeinanderfolgende Fahrten eine grundsätzliche Eignung für den Bezug einer Bräunungsdienstleistung (Bräunungsdusche, Solarium, o.ä.) und eine Körperreinigung (Bad, Dusch, o.ä.) ergeben. Eine höhere Dringlichkeit ergibt sich hierbei üblicherweise für die Bräunungsdienstleistung, um unangenehme Gerüche anschließend im Zuge der Körperreinigung zu beseitigen. Sofern eine in der Natur der Dienstleistung (EN) begründete Dringlichkeit nicht vorliegt oder ermittelbar ist, können sensorisch ermittelte Umstände die Dringlichkeit einer ersten Dienstleistung gegenüber einer zweiten Dienstleistung aufgrund vordefinierter Referenzen begründen. Beispielsweise können mittels einer Kamera Makeup, Haarschnitt, Länge der Fingernägel, o.ä., erfasst, per optischer Mustererkennung bewertet und zur automatischen Zuordnung der Dienstleistung, an welcher der Anwender ersichtlich den höchsten Bedarf hat, zu der bevorstehenden Fahrt verwendet werden.

Das Fahrtprofil kann insbesondere durch eine Dauer und/oder eine Fahrtstrecke bzw. Streckenlänge gekennzeichnet sein. Die Dauer der Fahrt kann darüber entscheiden, welche Dienstleistung bzw. Dienstleistungen während der Fahrt vollständig erbringbar sind. Hierzu kann eine digitale Datenbank umfassend Informationen betreffend die zu erwartenden Dauern der zu erbringenden Dienstleistungen mit der durch das Fahrtprofil bestimmten Dauer abgeglichen werden. Alternativ oder zusätzlich kann ein Ziel der bevorstehenden Fahrt bestimmt werden und in Abhängigkeit des Ziels bzw. einer Kategorie des Ziels eine geeignete Dienstleistung zur Erbringung während der Fahrt ausgewählt werden. Sofern weitere Umstände (unebene Wegstrecken, kurvenreiche Strecke, geringe Verfügbarkeit mobiler Datenkommunikation, o.ä.) weitere Restriktionen für die zu erbringenden Dienstleistungen darstellen, kann die bevorstehende Fahrt auch in Abhängigkeit der vorstehenden Informationen automatisch mit einer in geeigneter Weise während der Fahrt zu erbringenden Dienstleistung assoziiert werden.

Die bevorstehende Fahrt bzw. ihr Fahrtprofil können beispielsweise aus einer Fahrtenhistorie des Anwenders und alternativ oder zusätzlich mit Hilfe eines digitalen Kalenders (bzw. eines digitalen Kalendereintrages) und alternativ oder zusätzlich aufgrund einer vom Anwender anderweitig festgelegten Route (z.B. Eingabe eines Navigationsziels) ermittelt werden. Der Kalendereintrag kann beispielsweise einen Ort aufweisen, an welchen der Anwender zur Wahrnehmung des Termins mit dem Fortbewegungsmittel reisen möchte. Entsprechend kann eine geeignete Ausstattung für das Fortbewegungsmittel gewählt werden, welche die zu erbringende Dienstleistung während der Fahrt unterstützt und/oder ermöglicht.

Für die Dienstleistungserbringung im Rahmen der vorliegenden Erfindung kann beispielsweise ein Servicemobil als Fortbewegungsmittel verwendet werden, welches entsprechend den obigen Ausführungen eine temporär mit einer Fahrlafette verbindbare Kabine oder CAB aufweist. Da die Ausgestaltung der Kabine über die Eignung des Servicemobils/Fortbewegungsmittels zur Erbringung der Dienstleistung während der Fahrt entscheidet, kann in Abhängigkeit des ermittelten Fahrtprofils auch die dienstleistungsspezifische Kabine bzw. eine Vielzahl dienstleistungsspezifischer Kabinen ausgewählt werden, welche sich zur Dienstleistungserbringung eignen. Beispielsweise über einen Server können die Kabinen bzw. entsprechend ausgestattete Servicemobile ermittelt und aufgelistet werden. Ihre Entfernungen zum Startpunkt der bevorstehenden Fahrt und ihr Bereitschaftszustand kann bei der Auflistung Berücksichtigung finden. Insbesondere können lediglich solche Kabinen bzw. Servicemobile aufgelistet werden, welche während der zu erwartenden Fahrtzeit verfügbar sind. Auch kann im Ansprechen auf das ermittelte Fahrprofil automatisch eine Verbindung einer dienstleistungsspezifischen CAB mit einer Fahrlafette veranlasst werden, sofern kein geeignetes Servicemobil vollständig konfiguriert zur Verfügung steht.

Um dem Anwender eine maximale Flexibilität und Einflussnahme auf die zu erbringende Dienstleistung während der bevorstehenden Fahrt zu ermöglichen, kann eine Repräsentation einer Vielzahl potentiell während der Fahrt zu erbringender Dienstleistungen dargestellt werden. Dies kann beispielsweise auf einem Bildschirm eines Smartphones oder eines anderen mobilen Anwenderendgerätes erfolgen. Beispielsweise kann eine Liste, eine Karte mit verfügbaren Servicemobilen repräsentierenden Sinnbildern o.ä. dargestellt werden. Die Vielzahl potentiell während der Fahrt zu erbringende Dienstleistungen können zumindest anteilig, insbesondere sämtlich einem elektronischen Datenspeicher entstammen. Beispielsweise können eine Aufgabenliste des Anwenders, ein elektronischer Kalender und/oder andere Referenzen automatisch konsultiert werden, welche Aufschluss über die vom Anwender wahrscheinlich gewünschten Dienstleistungen geben. Hierbei können die während der Fahrt potentiell zu erbringenden Dienstleistungen insbesondere vorab daraufhin untersucht werden, inwiefern sie während der bevorstehenden Fahrt vollständig erbracht werden können. Dies kann zeitliche und/oder streckenparameter-spezifische Informationen über die zur Dienstleistungserbringung relevanten Randbedingungen berücksichtigen.

Um die Anwenderinformation und die Einflussnahme durch den Anwender weiter zu verbessern, kann dem Anwender eine Gegenüberstellung einer jeweiligen Repräsentation potentiell während der Fahrt zu erbringender Dienstleistungen und eines jeweiligen Eintrages einer Aufgabenliste des Anwenders dargestellt werden. Die Einträge der Aufgabenliste können auch in Form entsprechender Fahrtprofile oder Fahrziele dargestellt werden. Mit anderen Worten wird dem Anwender automatisch eine Zuordnung zwischen anstehenden Fahrten und potentiell während dieser zu erbringender Dienstleistungen veranschaulicht. Der Anwender kann nun eine Modifikation der Gegenüberstellung vornehmen, im Ansprechen worauf die automatisch erstellte Zuordnung zwischen Dienstleistungen und bevorstehenden Fahrten angepasst wird. Auf diese Weise kann der Anwender persönlich noch einmal priorisieren bzw. die (gegebenenfalls auch für ferner in der Zukunft liegende Fahrten) erstellte Zuordnung zu bestätigen. Insbesondere kann eine derartige Gegenüberstellung per Dragand-Drop-Gesten durch eine grafische Anwenderoberfläche (GUI) unterstützt werden.

Um den Anwender bestmöglich bei der Erledigung seiner Aufgaben und beim Konsum der gewünschten Dienstleistungen zu unterstützen, kann in einem ersten Schritt eine Vielzahl zu erwartender bevorstehender Fahrten ermittelt werden. Diese können beispielsweise in einem Kalender und/oder aufgrund einer Historie bisheriger Fahrten ermittelt werden. In Abhängigkeit der ermittelten Fahrten kann automatisch die während der Fahrt zu erbringende Dienstleistung bzw. können mehrere während der Fahrt zu erbringende Dienstleistungen den Fahrten automatisch zugeordnet werden. Auch hierbei kann eine Priorisierung der Dienstleistungen automatisch erfolgen und optional dem Anwender zuvor zur Ansicht gebracht werden. Auf diese Weise können alle Aufgaben und zu beziehende Dienstleistungen bis zu ihrer jeweiligen Erledigungsfrist bearbeitet/konsumiert werden.

Gemäß einem zweiten Aspekt der vorliegenden Erfindung wird eine Vorrichtung zur Unterstützung einer Erbringung einer Dienstleistung während einer Fahrt mit einem Fortbewegungsmittel/Servicemobil vorgeschlagen. Die Vorrichtung umfasst einen Dateneingang und eine Auswerteeinheit, optional auch einen Datenausgang. Der Dateneingang kann beispielsweise einen Busteilnehmer umfassen. Die Auswerteeinheit kann als Prozessor und/oder als elektronisches Steuergerät ausgestaltet sein. Der Datenausgang kann einen Busteilnehmer umfassen. Die gesamte Vorrichtung kann als stationärer Server ausgestaltet sein. Alternativ oder zusätzlich kann die Vorrichtung als mobiles Anwenderendgerät ausgestaltet sein. Mittels des Dateneingangs kann die Vorrichtung ein Fahrtprofil einer bevorstehenden Fahrt mit dem Fortbewegungsmittel ermitteln und in Abhängigkeit des Fahrtprofils automatisch eine während der Fahrt zu erbringende Dienstleistung zuordnen. Die Merkmale, Merkmalskombinationen und die sich aus diesen ergebenden Vorteile der erfindungsgemäßen Vorrichtung entsprechen derart ersichtlich denjenigen, welche in Verbindung mit dem oben genannten Verfahren verwirklicht werden, dass zur Vermeidung von Wiederholungen auf die obigen Ausführungen verwiesen wird.

Gemäß einem dritten Aspekt der vorliegenden Erfindung wird ein Computerprogrammprodukt vorgeschlagen, welches beispielsweise als Datenspeicher ausgestaltet ist. Auf dem Computerprogrammprodukt sind Instruktionen gespeichert, welche, wenn sie auf einem programmierbaren Prozessor / einer Auswerteeinheit einer erfindungsgemäßen Vorrichtung ausgeführt werden, die Auswerteeinheit in die Lage versetzen, die Schritte eines Verfahrens gemäß dem erstgenannten Erfindungsaspekt auszuführen. Das Computerprogrammprodukt kann als CD, DVD, Blue-Ray-Disc, Flash-Speicher, Festplatte, RAM/ROM, Cache, etc., ausgestaltet sein.

Gemäß einem vierten Aspekt der vorliegenden Erfindung wird eine Signalfolge repräsentierend Instruktionen vorgeschlagen, welche einen programmierbaren Prozessor in die Lage versetzen, die Schritte eines Verfahrens gemäß dem erstgenannten Erfindungsaspekt auszuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

### Kurzbeschreibung der Zeichnung

Nachfolgend werden Ausführungsbeispiele der vorliegenden Erfindung anhand der beigefügten Zeichnungen im Detail beschrieben. In den Zeichnungen ist:
- Figur 1: eine Prinzipskizze veranschaulichend im Rahmen der vorliegenden Erfindung verwendbare Ausführungsbeispiele für CABs in Verbindung mit einer Fahrlafette, um ein Servicemobil zur Realisierung der vorliegenden Erfindung zu erzielen;
- Figur 2: eine schematische Darstellung eines Plattform-Ökosystems zur Veranschaulichung von Informationsflüssen bei der Realisierung der vorliegenden Erfindung;
- Figur 3: eine schematische Darstellung einer Fahrlafette, zweier CABs und ihrer gegenseitigen Schnittstellen gemäß einem Ausführungsbeispiel der hier offenbarten Technologie;
- Figur 4: eine schematische Darstellung eines Szenarios zur Unterstützung einer Erbringung einer Dienstleistung während einer Fahrt mit einem Fortbewegungsmittel; und
- Figur 5: ein Flussdiagramm veranschaulichend Schritte eines Ausführungsbeispiels eines erfindungsgemäßen Verfahrens zur Unterstützung einer Erbringung einer Dienstleistung.

### Ausführungsformen der Erfindung

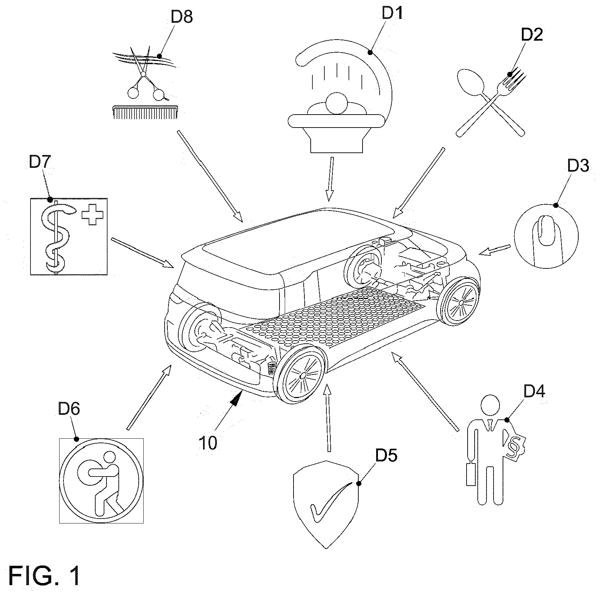

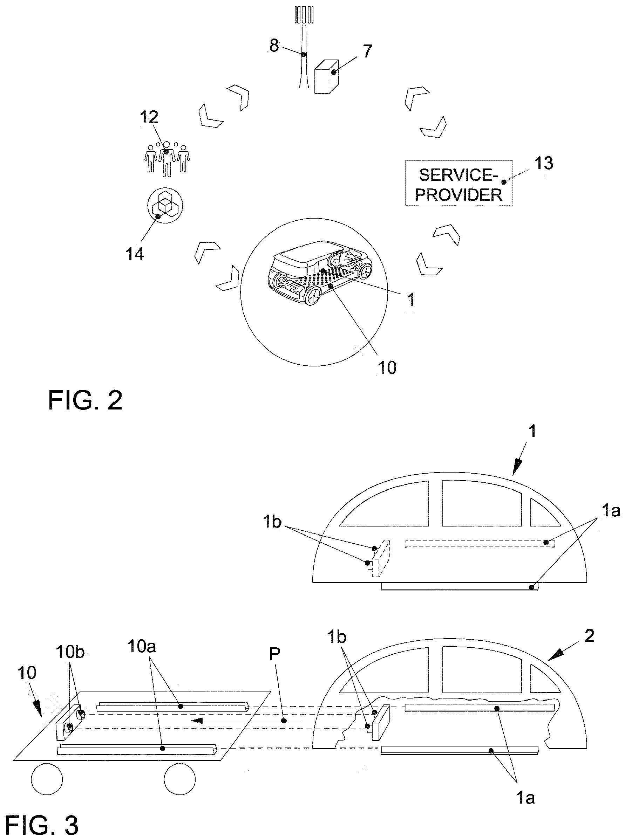

Figur 1 zeigt eine schematische Darstellung einer Fahrlafette 10 eines Servicemobils gemäß einem Ausführungsbeispiel der hier offenbarten Technologie. Die Fahrlafette bringt dabei sämtliche Merkmale mit, welche für die Fortbewegung, insbesondere die automatische Fortbewegung, erforderlich sind. Lediglich beispielhaft seien das Fahrwerk, der Antriebsstrang, der Energiespeicher, Längs-/Querführungslogik und -einrichtungen, Außenbeleuchtung, etc. Im Rahmen der vorliegend offenbarten Technologie werden (nicht dargestellte) CABs verwendet, um die Fahrlafette zur Erbringung einer jeweiligen Dienstleistung D1 bis D8 spezifisch einzurichten. Beispielsweise kann eine Bestrahlungs- und/oder Bräunungseinrichtung D1 in Form einer CAB mit der Fahrlafette 10 verbunden werden, um die Dienstleistung "Bräunung" anbieten zu können. Beispielsweise können eine UV-Bestrahlungseinheit und/oder eine Bräunungsdusche enthalten sein. Um gastronomische Dienstleistungen D2 erbringen zu können, kann eine Restaurant-CAB mit der Fahrlafette 10 verbunden werden. Die Zubereitung von Speisen und der Verzehr derselben kann durch die Einrichtung der CAB ermöglicht werden. Eine Kosmetik- bzw. Nagelpflege-Dienstleistung D3 kann beispielsweise erfordern, dass die CAB besondere Werkbänke, eine Absauganlage zum raschen Austausch der Innenraumluft und besonders helle Beleuchtungseinrichtungen (sog. Spots) aufweist. Zur Erbringung von Rechtsberatungsdienstleistungen D4 können eine Bibliothek und/oder mindestens zwei Sitzgelegenheiten in einer entsprechend ausgestalteten CAB vorgesehen sein. Entsprechendes gilt für eine Versicherungsberatungs-Dienstleistung bzw. Finanzberatungs-Dienstleistung D5. Insbesondere können hierbei Video-Konferenz-Hardware und ein großer Bildschirm zur Darstellung von Grafiken und anderen Präsentationsinhalten vorgesehen sein. Auch Reha-Dienstleistungen D6 und ärztliche Dienstleistungen D7 können durch die Ausgestaltung einer jeweiligen CAB bestmöglich unterstützt werden. Beispielsweise können Untersuchungs- und/oder Trainingsgeräte Bestandteile entsprechender CABs sein. Um Frisierdienstleistungen D8 bereitstellen zu können, kann beispielsweise ein Waschbecken, wie es in Friseursalons zum Haarewaschen üblich ist, ein 230V-Stecker zum Betreiben eines Haartrockners, ein großer Spiegel und ein höhenverstellbarer Frisierstuhl vorgesehen sein. Die vorgenannten CABs können über reversible mechanische Schnittstellen mechanisch fest und crash-sicher mit der Fahrlafette 10 verbunden werden. Um Energie- und Informationsflüsse zwischen der Fahrlafette 10 und der CAB zu gewährleisten, werden in Verbindung mit Figur 3 detailliert dargestellte reversible Schnittstellen vorgeschlagen.

Figur 2 zeigt eine schematische Darstellung eines Plattform-Ökosystems zur Veranschaulichung von Informationsflüssen bei der Realisierung der vorliegend offenbarten Technologie. Ein Micro-Service-Provider 14 individualisiert die CABs 1 der Servicemobile, welche anschließend mit einer jeweiligen Fahrlafette 10 (temporär oder dauerhaft) verbunden und bereitgestellt werden. Die Vermittlung der Servicemobile wird von einem Serviceprovider 13 übernommen, welcher über einen Server 7 und beispielsweise einen Funkturm 8 eines Drahtloskommunikationsnetzwerkes den Bedarf der Anwender 12 ermittelt und mit den grundsätzlich verfügbaren/angebotenen Servicemobilen abgleicht. Bestmögliche Kombinationen aus angebotenem Servicemobil und interessiertem Anwender 12 führen zum einzelnen Vertragsabschluss über die Bereitstellung von Mobilitätsdienstleistung und einer CAB-spezifischen Dienstleistung. Der Micro-Service-Provider 14 kann auch die einzelne Dienstleistung bzw. ein Dienstleistungspaket vor dem Endkunden erbringen und hierzu den Betrieb des Servicemobils bzw. der CAB überwachen und sicherstellen oder gar an Bord des Servicemobils eine manuelle Dienstleistung in einem bemannten Servicemobil erbringen. Selbstverständlich muss der Serviceprovider 14 nicht identisch mit dem Hersteller/Ausstatter der CAB 1 sein. Diesbezüglich ergeben sich unterschiedliche Konstellationen zum Design, zur Erstellung und zur Verwendung der CABs bei der Dienstleistungserbringung vor dem Endkunden.

Figur 3 zeigt eine prinzipielle, perspektivische Skizze zur temporären Verbindung einer Fahrlafette 10 mit einer ersten CAB 1 oder einer zweiten CAB 2. Korrespondierend zueinander ausgestattete mechanische Schnittstellen 10a auf der Fahrlafette 10 und mechanische Schnittstellen 1a in den CABs 1, 2 sorgen für eine rasche und crash-sichere Verbindung zwischen CAB 1, 2 und Fahrlafette 10. Sofern Informationen und/oder Energie von der CAB 1, 2 zur Fahrlafette 10 oder anders herum ausgetauscht werden sollen, werden zusätzliche, zueinander korrespondierende Schnittstellen 1b, 10b an den CABs 1, 2 und der Fahrlafette 10 angeordnet, welche ebenfalls in Richtung eines Pfeils P miteinander in Eingriff gebracht werden. Alternativ oder zusätzlich können in entsprechender Weise weitere oder alternative Schnittstellen zwischen den CABs 1, 2 und der Fahrlafette 10 miteinander in Eingriff gebracht werden. Beispielsweise können eine Heiz-/Kühlleistung, eine hydraulische Energie, Druckluft, etc., zwischen den CABs 1, 2 und der Fahrlafette 10 ausgetauscht werden. Die Schnittstellen können Informationstechnisch überwacht werden, so dass erst bei einer ordnungsgemäßen Kontaktierung der jeweiligen Schnittstellen und insbesondere einer entsprechenden Verriegelung der Schnittstellen eine Verwendung/Fahrt des Servicemobils ermöglicht wird. Während die dargestellten mechanischen Schnittstellen 10a der Fahrlafette 1 mit U- bzw. Schienenprofile ausgestaltet sind, welche mit beispielhaft dargestellten T-Profilen als Schnittstellen 1a der CABs 1, 2 in Eingriff gebracht werden können, versteht es sich von selbst, dass andere mechanische Schnittstellen möglich sind, welche gegebenenfalls in einer anderen Richtung als derjenigen des dargestellten Pfeils P miteinander in Eingriff zu bringen sind. Sofern die CABs 1, 2 jedoch aufgebockt in geeigneter Höhe gelagert werden können, kann die Fahrlafette 10 wie dargestellt selbsttätig unter die CAB 2 fahren, wobei die Schnittstellen 1b, 1a, 10b, 10a miteinander in Eingriff gebracht werden, ohne dass eine aufwendige Hebevorrichtung o.ä. erforderlich ist. Gegebenenfalls kann ein Luftfahrwerk der Fahrlafette 10 verwendet werden, um eine geringfügige Höhenanpassung vorzunehmen. Während im Rahmen der vorliegend offenbarten Technologie eine CAB nicht notwendiger Weise als Fahrgastzelle mit dienstleistungsspezifischer Inneneinrichtung verstanden werden muss, stellt dies eine geeignete Ausgestaltung der vorliegend offenbarten Technologie dar. Alternativ kann die CAB im Sinne der vorliegend offenbarten Technologie einen lediglich temporären Bestandteil der (integral mit der Fahrlafette 10 gefertigten) Fahrgastzelle darstellen. Bei dieser Ausgestaltung können die in Figur 3 dargestellten Schnittstellen (oder andere geeignete Schnittstellen) zwischen der CAB und der Fahrgastzelle angeordnet sein. Die Schnittstellen können beispielsweise am Dach und/oder in den Seitenwänden und/oder im Boden der CAB sowie der Fahrgastzelle angeordnet sein.

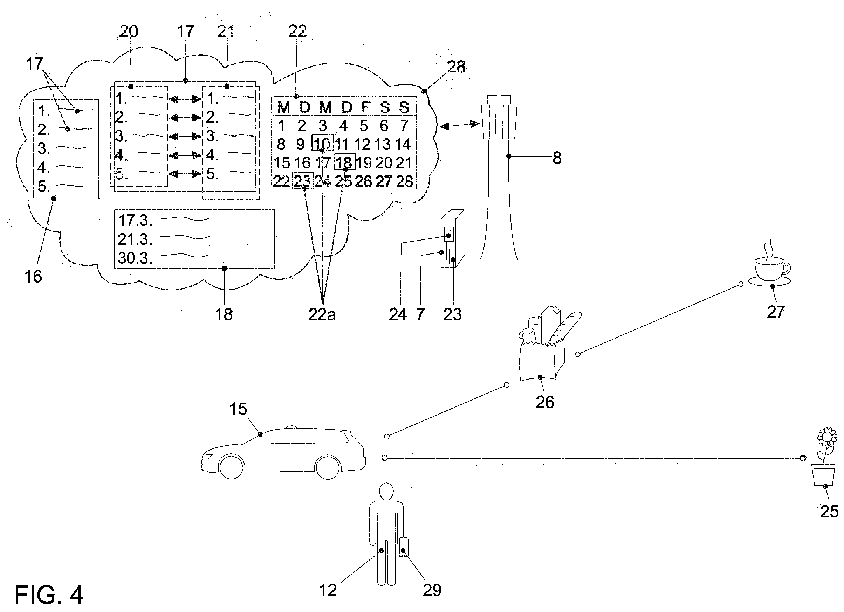

Figur 4 zeigt eine schematische Übersicht einer Situation, in welcher das erfindungsgemäße Verfahren zur Unterstützung einer Erbringung einer Dienstleistung während einer Fahrt mit einem Fortbewegungsmittel ausgeführt und hierbei durch ein Ausführungsbeispiel einer erfindungsgemäßen Vorrichtung zur Unterstützung einer Erbringung einer Dienstleistung während einer Fahrt mit einem Fortbewegungsmittel unterstützt wird. Ein Anwender 12 hat im Laufe der nächsten Zeit Einkäufe 26 zu erledigen, Blumen 25 aus einem Blumenladen zu besorgen und ist mit einem Freund zum Kaffee 27 verabredet. Die vorgenannten Aufgaben sind als Einträge 17 in einer Aufgabenliste 16 in einer Cloud (zu Deutsch: "Datenwolke") 28 gespeichert. Über das Smartphone 29 des Anwenders 12 kann der Anwender 12 Einfluss auf die Einträge 17 nehmen, die Einträge 17 anzeigen lassen und nach etwaiger Änderung zurück in die Cloud 28 speichern. Zudem ist in der Cloud 28 ein Kalender 22 des Anwenders gespeichert, in welchem Kalendereinträge 22a mit ggf. eingetragenen Ortsangaben gespeichert sind. Zumindest die Einkäufe 26 nimmt der Anwender 12 regelmäßig vor, was aus einer Fahrtenhistorie 18 hervorgeht, welche ebenfalls in der Cloud 28 gespeichert ist. Die Fahrtenhistorie 18 wird beispielsweise aufgrund von satellitenbasiert ermittelten Positionsdaten mittels eines GPS-Trackers (nicht dargestellt) und/oder mittels des Smartphones 29 des Anwenders 12 ermittelt. Ein Funkturm 8 steht in informationstechnischer Verbindung mit einem Dateneingang 23 und über diesen mit einem Prozessor 24 als Auswerteeinheit eines Servers 7. Der Server 7 kann als Ausführungsbeispiel einer erfindungsgemäßen Vorrichtung erachtet werden. Der Server 7 hat Zugriff auf die Cloud 28 bzw. die unter dem Profil des Anwenders 12 gespeicherten Daten. Um den Anwender 12 bestmöglich bei der Erledigung seiner Aufgaben und Wahrnehmung seiner Termine zu unterstützen, verwendet der Anwender 12 Servicemobile 15, welche aus einer Fahrlafette und einer CAB bestehen (s. Figuren 1 bis 3 und zugehörige Beschreibung). Anhand der Fahrtenhistorie 18 und des Kalendereintrags 22 ermittelt der Server 7 Fahrtprofile bevorstehender Fahrten mit dem Servicemobil 15. Um die in der Aufgabenliste 16 enthaltenen Einträge 17 möglichst effizient abhaken zu können, schlägt der Server 7 eine Gegenüberstellung 20 zwischen Einträgen 17 der Aufgabenliste 16 und Repräsentationen 21 potentiell während der Fahrt zu erbringender Dienstleistungen D1 bis D8 vor. Mit anderen Worten wird dem Anwender (z.B. auf seinem Smartphone 29) die Gegenüberstellung 20 in Listenform und/oder grafisch dargestellt, wobei optional auch das jeweilige Fahrtprofil und/oder das jeweilige Fahrtziel und/oder der jeweilige Fahrtzweck den Einträgen 17 bzw. den Repräsentationen 21 zugeordnet werden kann. Die Gegenüberstellung 19 selbst stellt daher eine erfindungsgemäße automatische Zuordnung einer während der Fahrt zu erbringenden Dienstleistung zu dem Fahrtprofil dar. Unabhängig hiervon hat der Anwender 12 nun die Möglichkeit, Einfluss auf die Gegenüberstellung 20 zu nehmen, sofern ihm die automatisch erstellte Zuordnung nicht genehm ist. Die Gegenüberstellung 20 veranschaulicht dem Anwender 12 im dargestellten Beispiel also in Abhängigkeit der Fahrtdauern, welche mit den Einkäufen 26, den Besuch des Blumenladens und des Kaffeekränzchens zu erwarten sind, welche Einträge 17 der Aufgabenliste 16 sich durch Inanspruchnahme mobiler Dienstleistungen innerhalb des Servicemobils 15 auf der jeweils bevorstehenden Fahrt zeitneutral erledigen lassen.

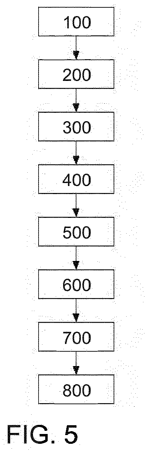

Figur 5 zeigt Schritte eines Ausführungsbeispiels eines erfindungsgemäßen Verfahrens zur Unterstützung einer Erbringung einer Dienstleistung während einer Fahrt mit einem Fortbewegungsmittel. Auch in diesem Zusammenhang sei noch einmal betont, dass die Unterstützung einerseits für den Anwender, andererseits für den jeweiligen Dienstleistungsanbieter gilt. In Schritt 100 werden unter Vermittlung einer Cloud bevorstehende Fahrten eines Anwenders ermittelt. In Schritt 200 werden Fahrtprofile der bevorstehenden Fahrten ermittelt, welche beispielsweise die Dauer der jeweiligen Fahrt und grundsätzliche Streckenparameter wiedergeben. In Schritt 300 wird eine digitale Aufgabenliste des Anwenders ausgelesen, um den Bedarf ggf. während der Fahrt zu erbringender Dienstleistungen zu ermitteln. Anschließend wird in Schritt 400 eine zu erwartende Dauer einer Erbringung einer der Dienstleistungen mit einer zu erwartenden Dauer der bevorstehenden Fahrten verglichen. Hierdurch wird sichergestellt, dass die Dienstleistung vollständig während der bevorstehenden Fahrt erbracht werden kann. In Schritt 500 wird dem Anwender App-basiert eine Repräsentation einer Vielzahl potentiell während der bevorstehenden Fahrt zu erbringende Dienstleistungen dargestellt. Beispielsweise kann dies auf einem mobilen Anwenderendgerät in Listenform oder grafisch unterstützt erfolgen. Der Anwender kann nun die Dienstleistungen auswählen, welche er während der Fahrt gerne in Anspruch nehmen möchte. In dieser Repräsentation kann der Anwender beispielsweise diejenigen Dienstleistungen auswählen, welche er grundsätzlich für eine Erbringung während der Fahrt in Betracht zieht. In Schritt 600 wird dem Anwender eine Gegenüberstellung einer jeweiligen Repräsentation potentiell während der Fahrt zu erbringender Dienstleistungen und eines jeweiligen Eintrages einer Aufgabenliste eines Anwenders dargestellt. Diese Gegenüberstellung kann automatisch erstellt sein. Sie ermöglicht eine Kontrolle, Priorisierung und Einflussnahme auf die Dienstleistungen, welche der Anwender während der bevorstehenden Fahrt in Anspruch nehmen möchte. Dem Anwender kann auch eine weitere Gegenüberstellung (z.B. zwischen den Fahrtzielen der kommenden Stunden oder Tage und den Fahrtdauern sowie den geeigneter Weise während der Fahrtdauern zu beziehenden Dienstleistungen angezeigt werden und für eine Einflussnahme durch den Anwender bereitgestellt werden. In Schritt 700 wird automatisch eine während der Fahrt zu erbringende Dienstleistung dem Fahrtprofil zugeordnet. Über eine grafische Zuordnung hinaus oder alternativ hierzu kann das Zuordnen auch als "Reservieren" oder "Bestellen" der Dienstleistung für das Fahrtprofil der bevorstehenden Fahrt verstanden werden. Mit anderen Worten kann das Zuordnen ein Senden einer Anfrage an einen Dienstleistungserbringer bzw. eine Serviceplattform umfassen, über welche der Anwender ein Servicemobil anfragt. In Schritt 800 schließlich wird eigens zur Erbringung der Dienstleistung des Anwenders temporär eine dienstleistungsspezifische Kabine/CAB ausgewählt und erforderlichenfalls mit einer Fahrlafette zu einem Servicemobil kombiniert, um die zugeordnete Dienstleistung während der bevorstehenden Fahrt des Anwenders erbringen zu können. Die Kombination der CAB mit der Fahrlafette kann beispielsweise in einer Servicewerkstatt eines Anbieters für Mobilitätsdienstleistungen erfolgen.

Im Rahmen der vorliegenden Erfindung können die folgenden Merkmale verwendet werden:
- Der Dienstleistungsbedarf kann aus einer Historie oder einem Kalendereintrag (Ort oder Person, gewünschte Services oder Navi-Eingabe o.ä.) ermittelt werden.
- Weiter kann der Endkunde durch Push-Notifikation/Rabatt auf Grundlage persönlicher Bewegungs- und Nutzungshistorie auf eine potenzielle Servicefahrt hingewiesen werden.
- Neben der manuellen Bestätigung kann der Service-Anbieter das operative Management des Services von einer K.l. (künstliche Intelligenz) übernehmen lassen. Hier ist ein Dienstleistung-To-Do-Liste (Terminplaner K.l. (künstliche Intelligenz)) für den Endkunden zu nennen. Dabei legt der Endkunde Aufgaben bis zu einer Deadline fest. Das System sorgt dann dafür, dass der Endkunde diese bis zu diesem Zeitpunkt bei seinen (regelmäßigen) Fahrten erledigt hat.

### Bezugszeichenliste

- 1: erste CAB
- 1a: mechanische Schnittstelle der CAB
- 1b: informationstechnische/energetische Schnittstelle der CAB
- 2: zweite CAB
- 7: Server
- 8: Funkturm
- 10: Fahrlafette
- 10a: mechanische Schnittstelle der Fahrlafette
- 10b: energetische/informationstechnische Schnittstelle der Fahrlafette
- 12: Anwender
- 13: Serviceprovider
- 14: Micro-Service-Provider
- 15: Servicemobil
- 16: Aufgabenliste
- 17: Einträge
- 18: Fahrtenhistorie
- 20: Gegenüberstellung
- 21: Repräsentation potentiell während der Fahrt zu erbringender Dienstleistungen
- 22: Kalender
- 22a: Kalendereinträge
- 23: Dateneingang
- 24: Prozessor
- 25: Blume
- 26: Einkäufe
- 27: Kaffee
- 28: Datenwolke, "Cloud"
- 29: Smartphone
- 100-800: Verfahrensschritte
- D1-D8: Dienstleistungen

## Patentansprüche

1. Verfahren zur Unterstützung einer Erbringung einer Dienstleistung (D1-D8) während einer Fahrt mit einem Fortbewegungsmittel (15) umfassend die Schritte:
- Ermitteln (200) eines Fahrtprofils einer bevorstehenden Fahrt mit dem Fortbewegungsmittel (15) und in Abhängigkeit des Fahrtprofils
- automatisches Zuordnen (700) einer während der Fahrt zu erbringenden Dienstleistung (D1-D8).

2. Verfahren nach Anspruch 1 weiter umfassend
- Auslesen (300) einer digitalen Aufgabenliste (16) und in Abhängigkeit der Einträge (17) der Aufgabenliste (16)
- automatisches Zuordnen (700) der während der Fahrt zu erbringenden Dienstleistung (D1-D8).

3. Verfahren nach Anspruch 1 oder 2, wobei das Zuordnen der während der Fahrt zu erbringenden Dienstleistung (D1-D8)
- in Abhängigkeit einer vordefinierten Dringlichkeit erfolgt.

4. Verfahren nach einem der vorstehenden Ansprüche, wobei das Fahrtprofil durch
- eine Dauer und/oder
- ein Ziel
der bevorstehenden Fahrt bestimmt ist.

5. Verfahren nach einem der vorstehenden Ansprüche weiter umfassend
- Vergleichen (400) einer zu erwartenden Dauer einer Erbringung der Dienstleistung (D1-D8) mit einer zu erwartenden Dauer der bevorstehenden Fahrt und
- Zuordnen (700) der Dienstleistung (D1-D8) in Abhängigkeit eines Ergebnisses des Vergleiches.

6. Verfahren nach einem der vorstehenden Ansprüche, wobei die bevorstehende Fahrt automatisch anhand
- einer Fahrtenhistorie (18) und/oder
- eines Kalendereintrags (22a) und/oder
- einer Festlegung eines Navigationsziels
ermittelt wird.

7. Verfahren nach einem der vorstehenden Ansprüche weiter umfassend
- Auswählen (800) einer temporär für ein Servicemobil als Fortbewegungsmittel (15) zu verwendenden dienstleistungsspezifischen Kabine (1) in Abhängigkeit der zu erbringenden Dienstleistung (D1-D8).

8. Verfahren nach einem der vorstehenden Ansprüche weiter umfassend
- Darstellen (500) einer Repräsentation einer Vielzahl potentiell während der Fahrt zu erbringender Dienstleistungen (D1-D8).

9. Verfahren nach einem der vorstehenden Ansprüche weiter umfassend
- Darstellen (600) einer Gegenüberstellung (20) einer jeweiligen Repräsentation (21) potentiell während der Fahrt zu erbringender Dienstleistungen (D1-D8) und eines jeweiligen Eintrages (17) einer Aufgabenliste (16) eines Anwenders (12).

10. Verfahren nach einem der vorstehenden Ansprüche weiter umfassend
- Ermitteln (100) einer Vielzahl zu erwartender bevorstehender Fahrten und in Abhängigkeit der Fahrten
- automatisches Zuordnen (700) der während der Fahrt zu erbringenden Dienstleistung (D1-D8).

11. Vorrichtung zur Unterstützung einer Erbringung einer Dienstleistung (D1-D8) während einer Fahrt mit einem Fortbewegungsmittel (15) umfassend:
- einen Dateneingang (23) und
- eine Auswerteeinheit (24), wobei
die Auswerteeinheit (24) eingerichtet ist,
- mittels des Dateneingangs (23) ein Fahrtprofil einer bevorstehenden Fahrt mit dem Fortbewegungsmittel (15) zu ermitteln und in Abhängigkeit des Fahrtprofils
- automatisch eine während der Fahrt zu erbringende Dienstleistung (D1-D8) zuzuordnen.

12. Vorrichtung nach Anspruch 11, welche eingerichtet ist, ein Verfahren nach einem der vorstehenden Ansprüche 1 bis 10 auszuführen.

13. Computerprogrammprodukt umfassend Instruktionen, welche, wenn Sie auf einer Auswerteeinheit (24) einer Vorrichtung (1) nach einem der Ansprüche 11 oder 12 ausgeführt werden, die Auswerteeinheit (24) veranlassen, die Schritte eines Verfahrens nach einem der Ansprüche 1 bis 10 durchzuführen.

14. Signalfolge repräsentierend Instruktionen, welche, wenn Sie auf einer Auswerteeinheit (24) einer Vorrichtung (1) nach einem der Ansprüche 11 oder 12 ausgeführt werden, die Auswerteeinheit (24) veranlassen, die Schritte eines Verfahrens nach einem der Ansprüche 1 bis 10 durchzuführen.
